(19) Europäisches Patentamt

European Patent Office

Office européen des brevets

(11) **EP 1 160 776 A2**

(12) **EUROPEAN PATENT APPLICATION**

(43) Date of publication:
**05.12.2001 Bulletin 2001/49**

(51) Int Cl.[7]: **G11B 7/12**
// G11B7/125

(21) Application number: **01113040.8**

(22) Date of filing: **29.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.05.2000 JP 2000162027**

(71) Applicant: **Matsushita Electric Industrial Co., Ltd.**
**Kadoma-shi, Osaka-fu, 571-8501 (JP)**

(72) Inventors:
• **Onozawa, Kazutoshi**
**Takatsuki-shi, Osaka 569-0818 (JP)**

• **Imafuj, Osamu**
**Takatsuki-shi, Osaka 569-1044 (JP)**
• **Yuri, Masaaki**
**Ibaraki-shi, Osaka 567-0828 (JP)**
• **Ijima, Shinichi**
**Takatsuki-shi, Osaka 569-1142 (JP)**

(74) Representative: **Stippl, Hubert, Dipl.-Ing.**
**Hafner & Stippl,**
**Patentanwälte,**
**Schleiermacherstrasse 25**
**90491 Nürnberg (DE)**

(54) **Optical pick-up and information recording and reproducing apparatus**

(57)    An optical-pick up preventing the deterioration of the optical property by mounting the entire optical system on the movable portion and aligning the optical axis of the semiconductor laser element having the shortest wavelength with the center of the optical axis of the objective lens and an information recording and reproducing apparatus on which the optical pick-up is mounted. The optical pick-up includes a movable portion 6 on which at least a plurality of semiconductor laser elements 2 irradiating an optical recording medium 12 with laser beams and an objective lens 1 converging laser beams emerged from the semiconductor laser element are mounted, a fixed portion 7 supporting the movable portion 6, and a supporting component 8 connecting the movable portion 6 to the fixed portion 7 so that the movable portion 6 is rockable in a focus direction and a tracking direction of the optical recording medium 12; wherein at least two of the plurality of semiconductor laser elements 2 have a different lasing wavelength from each other and an optical axis of the semiconductor laser element having the shortest wavelength is aligned with the center of the optical axis of the objective lens 1. Thereby, it is possible to prevent the optical displacement in the optical system when the position of the objective lens is changed.

FIG. 1

EP 1 160 776 A2

## Description

The present invention relates to an information recording and reproducing apparatus applicable for information processing, communication applications and the like, and an optical pick-up used therefore. More specifically, the present invention relates to an optical pick-up on which an entire optical system, including a light-emitting portion to a photo-receiving portion, is mounted on a movable portion with a high integration.

Recently, a high density of the optical disk has been developed in accordance with an appearance of a digital versatile disk (DVD), and an optical disk with a large capacity of 8.5 GB has been realized. A general reproducing apparatus for digital versatile disks (DVDs) is required to reproduce information not only of a DVD but also of a compact disk (CD). Furthermore, it occasionally is required to reproduce and record information of a rewritable CD (CD-R), which rapidly has become prevalent. As a light beam for the reproduction of DVD, a red laser of 650 nm in wavelength is used. As a light for the reproduction of CD or CD-R, an infrared laser beam of 780 nm in wavelength is used. Therefore, in the current DVD reproducing apparatus, two semiconductor laser chips are mounted, that is, a semiconductor laser chip radiating red laser beams and an infrared semiconductor laser chip radiating infrared laser beams.

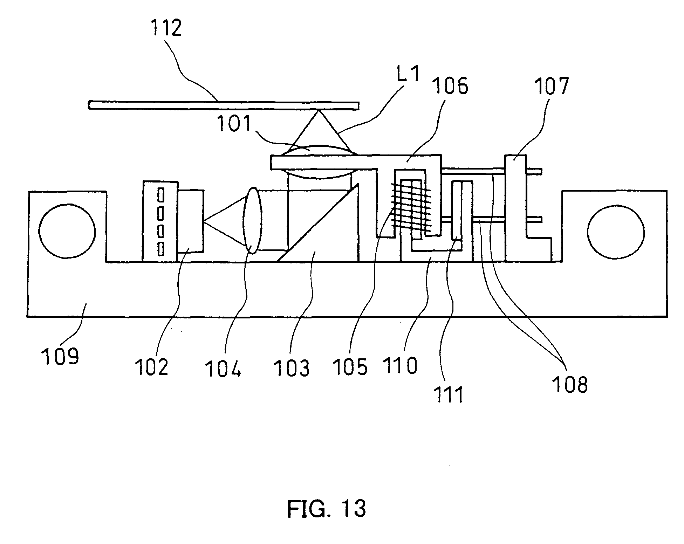

In order to read and write information of the optical recording medium such as a DVD, a CD or the like, an optical pick-up is used. Figure 13 is a side view showing a configuration of a conventional optical pick-up. Numeral 106 denotes a movable portion having an objective lens 101 and a coil 105. The movable portion 106 is connected to a fixed portion 107 with four supporting wires 108 and supported rockably. An integrated element 102 of a semiconductor chip and a photodetector, a collimating lens 104, and a mirror 103 are fixed to an optical base board 109. In Figure 13, two of the four supporting wires are not shown because they are hidden behind the two supporting wires shown in this Figure. An optical recording medium 112 is required to be positioned within the depth of the field of a flux L1 of light beams converged by the objective lens 101 because the vertical vibration occurs when the medium 112 is rotated. Furthermore, the decentering of the optical recording medium 112 occurs when the medium 112 is rotated. For allowing the flux L1 of light beams converged by the objective lens 101 to follow up a recording line on the optical recording medium 112 accurately, the optical pick-up is required to have a focus adjusting function and a focus error detecting function for the light flux and a tracking position adjusting function and a tracking error detecting function.

In the optical pick-up, with respect to the vertical vibration of the optical recording medium 112, the focus adjustment is carried out by allowing the objective lens 101 to be movable in a focus direction, that is, in a direction of the light axis of emitted light beams. Furthermore, with respect to the decentering of the optical recording medium 112, the objective lens 101 is allowed to follow up the information recording line by allowing the objective lens 101 to be movable in a tracking direction, that is, a direction crossing the information recording line on the optical recording medium. According to this configuration, writing or reading of information recording signals is carried out.

Herein, with the demand for miniaturization of the information-processing equipment such as a personal computer and the like, it is necessary to develop small and thin DVD reproducing apparatuses. In order to realize small and thin apparatuses, it is essential to make an optical pick-up to be small and thin. An example of methods for making an optical pick-up to be small and thin includes a simplification of an optical system. One possible method is the integration of the red semiconductor laser chip and the infrared semiconductor laser chip. The current DVD reproducing apparatus includes two optical system components: an optical system component for a red semiconductor laser chip and for an infrared semiconductor laser chip. By integrating the red semiconductor laser chip and infrared semiconductor laser chip, the semiconductor has two optical systems thereon. Thus, a small and thin optical pick-up can be realized.

As the integration of the red semiconductor laser chip and the infrared semiconductor laser chip, a monolithic semiconductor laser array is reported in JP11 (1999)-186651 A (a first prior art) and 3a-ZC-10 of the 60th Annual Meeting in autumn in The Japan Society of Applied Physics (a second prior art). Furthermore, the optical pick-up having two optical system components by integrating the red semiconductor laser chip and the infrared semiconductor laser chip in a form of hybrid is reported in the JP 11(1999)-144307A (a third prior art) and JP11 (1999)-147652 A (a fourth prior art).

However, each conventional pick-up has the following disadvantages. The monolithic semiconductor laser array integrated on the substrate according to the first prior art uses GaAs having an energy gap that is equal to or smaller than the energy gap (band gap) of the active layers both on the red laser and the infrared laser as a current block layer (narrow layer) for injecting electric current efficiently. Thus, the semiconductor according to the first prior art employs a complex refractive index waveguide structure confining the generated light beams in a stripe-shaped region effectively by absorbing laser beams emitted from the active layers. However, in the semiconductor laser element using the complex refractive index waveguide structure, the generated light beams are absorbed by the current block layer including GaAs. Therefore, it is extremely difficult to obtain a self-sustianed pulsation property or a high temperature high output property necessary for the information recording and reproducing apparatus.

Furthermore, since the semiconductor laser array according to the second prior art has a so-called gain waveguide structure without a current block layer, optical absorption by the current block layer does not occur. However, since the gain waveguide structure semiconductor laser element does not have an index waveguide structure for effectively confining the generated light beams, in order to realize a low noise that is necessary for an information recording and reproducing apparatus, it is necessary to have a means for suppressing the interference by, for example, making the oscillation spectrum to be a multimode.

However, even if the oscillation spectrum is made to be a multimode, the half value width of each spectrum is narrow, which easily causes the interference between the emitted light beams and the returned light beams. Consequently, it is not possible to lower the relative noise intensity (RIN) to be — 130 dB/Hz or less. Therefore, the semiconductor laser array having a gain waveguide structure according to the second prior art needs a means for lowering the RIN by the use of a $1/4\lambda$ plate (wherein $\lambda$ denotes a wavelength of the laser beam emitted from the semiconductor laser element) and the like, which makes it difficult to reduce the number of the components constituting the optical pick-up. In order to solve such problems, it is necessary and essential to provide a semiconductor laser array with a self-sustianed pulsation property.

Furthermore, the gain waveguide semiconductor laser array has a current narrowing function but does not have a function of confining the light beams by using the distribution of refractive index in the horizontal direction with respect to the main surface of the active layer. Therefore, in a state in which the reproduction of DVD or CD is carried out under the low output operation of 10 mW or less, it is possible to maintain a single transverse mode property under the room temperature, but it is difficult to obtain a stable traverse property at high temperature because a carrier is highly injected and the high order mode easily obtains a gain. Furthermore, since the semiconductor laser array is in a high output operation, it does not have the function of confining the light beams, and it is further difficult to achieve a stable traverse mode property.

Furthermore, it is preferable that since the monolithic dual wavelength laser element array has two of the optical components, the position, i.e., the heights from the substrate of the active layers of each laser element are made to be the same. However, although the semiconductor element array has a monolithic structure, since the active layer of each laser element has a different composition, the processes for growing the active layers have to be carried out separately, which causes a difference in height of the active layers.

Furthermore, the optical pick-ups according to the third and fourth prior arts use an element in which the red semiconductor laser chip and the infrared semiconductor laser chip are integrated in a hybrid form on the substrate including a photodetector.

However, even if the red semiconductor laser chip and infrared semiconductor laser chip are integrated in a hybrid form, it is difficult to control the position of the active layers and the distance between the light emitting spots of the semiconductor laser chips.

Furthermore, in the optical pick-ups according to the above-mentioned prior arts, as shown in Figure 13, an integrated element 102 of a semiconductor laser chip and a photodetector, a collimating lens 104, and a mirror 103 are fixed and only an objective lens 101 can move and follow up the vertical vibration of the optical recording medium 112 or the information recording line. Due to the position change of the objective lens 101, the optical system of the optical pick up is dislocated optically. Therefore, the lens aberration and the like occurs, thus deteriorating the optical characteristics.

With the foregoing in mind, it is an object of the present invention to provide an optical pick-up capable of preventing the deterioration of the optical property by mounting an entire optical system, including a light-emitting portion to a photo-receiving portion, on a movable portion, and aligning the optical axis of the semiconductor laser element having the shortest wavelength with the center of the optical axis of the objective lens, and to provide an information recording and reproducing apparatus on which the optical pick-up is mounted.

In order to achieve the above-mentioned object, the optical pick-up of the present invention includes a movable portion on which at least a plurality of semiconductor laser elements irradiating an optical recording medium with laser beams and an objective lens converging laser beams emerged from the semiconductor laser element are mounted, a fixed portion supporting the movable portion, and a supporting component connecting the movable portion to the fixed portion so that the movable portion is rockable in a focus direction and a tracking direction of the optical recording medium; wherein at least two of the plurality of semiconductor laser elements have the different lasing wavelength from each other and an optical axis of the semiconductor laser element having the shortest wavelength is aligned with the center of the optical axis of the objective lens.

According to such an optical pick-up, since the optical system for emitting laser beams and the optical system for photo-receiving are formed into one piece on the movable portion, it is possible to prevent the optical displacement in the optical system when the position of the objective lens is changed. Furthermore, since the optical axis of the semiconductor laser element having the shortest wavelength is aligned with the center of the optical axis of the objective lens, it is possible to reduce the influence by the lens aberration and the like with respect to the semiconductor laser element having the short wavelength, thus preventing the deterioration of the optical pick-up. Furthermore, even if the objective lens follows up the optical recording medium, since the optical system moves as a whole, the relationship in which the optical axis of the semiconductor laser element having the shortest semiconductor laser element is aligned with the center of the optical axis of the objective lens is maintained even if the position of the objective lens is changed. Therefore, it is possible to prevent the deterioration of the optical property without any particular adjustment in accordance with the position change of the objective lens.

It is preferable in the above-mentioned optical pick-up that the plurality of semiconductor laser elements are elements included in a semiconductor laser array having a plurality of lasing wavelengths. According to such an optical pick-up, it is possible to reduce the interval of an optical path of the plurality of laser beams emitted from the semiconductor laser array, thus reducing the influence on a plurality of laser beams by the lens aberration and the like.

It is preferable in the above-mentioned pick-up that the semiconductor laser array includes a first laser element having a first active layer including a first semiconductor formed on a substrate; and a second laser element formed on the substrate, spaced with respect to the first laser element, and having a second active layer comprising a second semiconductor having an energy gap larger than the energy gap of the first active layer, and wherein the height from the substrate surface to the second active layer is substantially the same as the height from the substrate surface to the first active layer. According to such an optical pick-up, it is possible to prevent the variance of the emission spots of the laser beams having the different wavelengths, and thereby the lens aberration can be suppressed easily. As a result, the optical characteristics can be stabilized.

Furthermore, it is preferable in the above-mentioned optical pick-up that the second laser element has a height adjusting buffer layer including a third semiconductor that is a first conductive type so that the height from the substrate surface to the second active layer is substantially the same as the height from the substrate surface to the first active layer. According to such an optical pick-up, since the height adjusting buffer layer is provided, the height of the first active layer and the second active layer can be made to be substantially the same. Therefore, it is possible to prevent the variance in height of the light emitting spots of the laser beams having the different wavelength, and thereby the optical adjustment of the optical pick-up can be carried out easily and the lens aberration can be suppressed. As a result, the optical characteristics can be stabilized, and the crystalline property is improved, and thus the reliability of the second laser element can be improved.

Furthermore, it is preferable in the above-mentioned optical pick-up that a photodetector for receiving the returned light beams from the optical information recording medium is mounted on the movable portion. According to such an optical pick-up, since the semiconductor laser element and the photodetector can be integrated, the semiconductor laser element and the photodetector can be integrated.

Furthermore, it is preferable in the above-mentioned optical pick-up that the plurality of semiconductor laser elements and the photodetectors are integrated via a substrate, and the substrate is provided with a mirror reflecting laser beams emitted from the semiconductor laser element. According to such an optical pick-up, since the semiconductor laser element and the photodetector can be integrated, the movable portion can be made small and thin.

Furthermore, it is preferable in the above-mentioned optical pick-up that the plurality of semiconductor elements are elements included in a semiconductor laser array having a plurality of lasing wavelengths. According to such an optical pick-up, the semiconductor laser array having a plurality of lasing wavelengths can be integrated on the semiconductor substrate, which makes it easy to adjust the semiconductor laser elements as compared with the case where a plurality of semiconductor elements are disposed separately.

Furthermore, it is preferable in the above-mentioned optical pick-up that the supporting components include a plurality of metal members independent in electric potential respectively, and at least one of the plurality of metal members works as an electric feeder line with respect to the semiconductor laser element. According to such an optical pick-up, since the supporting components function as a wiring for driving the semiconductor laser array to be mounted or many electrode terminals necessary for the signal output to be obtained, wiring or flexible substrate can be omitted.

Furthermore, it is preferable in the above-mentioned optical pick-up that the photodetector receiving the returned light beams from the optical information medium is further mounted on the movable portion, and at least one of the plurality of metal members works as an electric feeder line with respect to the semiconductor laser element. According to such an optical pick-up, wiring or a flexible substrate also can be omitted.

Next, the information recording and reproducing apparatus of the present invention is characterized in that the above-mentioned optical-pick ups are mounted. According to such an information recording and reproducing apparatus, since the optical pick-up of the present invention is used, it is possible to record and reproduce the information while preventing the deterioration of the optical property. Thus, it is possible to realize the information recording and reproducing apparatus with a stable signal property. Furthermore, it is advantageous for making the information recording and reproducing apparatus small and thin.

Figure 1 is a cross-sectional view showing a configuration of one example of an optical pick-up in a first embodiment according to the present invention.

Figure 2 is a cross-sectional view showing a configuration of another example of an optical pick-up of a first embodiment according to the present invention.

Figure 3 is a top view showing a configuration of an optical pick-up in Figure 1.

Figure 4 is a cross-sectional view taken along line II-II in Figure 3.

Figure 5 is a cross-sectional view taken along line III-III in Figure 4.

Figure 6 is a cross-sectional view showing a configuration of a semiconductor laser array to be mounted on an optical pick-up in a second embodiment according to the present invention.

Figure 7 is a cross-sectional view showing a semiconductor laser array to be mounted on an optical pick-up in a third embodiment according to the present invention.

Figure 8 is a graph showing a relationship between a layer thickness of a first p-type clad layer in an infrared semiconductor laser element and an Al composition of a third p-type clad layer with respect to the effective refractive index difference $\Delta$n in the semiconductor laser array mounted on the optical pick-up in the second embodiment according to the present invention.

Figure 9 is a perspective view showing an integrated element in which a semiconductor laser array and a photodetector are integrated, which are mounted on the optical pick-up in a fourth embodiment according to the present invention.

Figure 10 is a perspective view showing an integrated element in which a semiconductor laser array and a photodetector are integrated, which are mounted on another example of the optical pick-up in the fourth embodiment according to the present invention.

Figure 11 is a perspective view showing an information recording and reproducing apparatus in a fifth embodiment according to the present invention.

Figure 12 is a perspective view showing a notebook-sized personal computer on which an information recording and reproducing apparatus is mounted in a fifth embodiment according to the present invention.

Figure 13 is a cross-sectional view showing a configuration of an example of a conventional optical pick-up.

Hereinafter, the present invention will be described in more detail by way of embodiments with reference to the accompanying drawings. Each drawing applied for the following explanation is shown schematically so that the present invention can be understood, and the present invention is not necessarily limited to the examples shown in these drawings.

First Embodiment

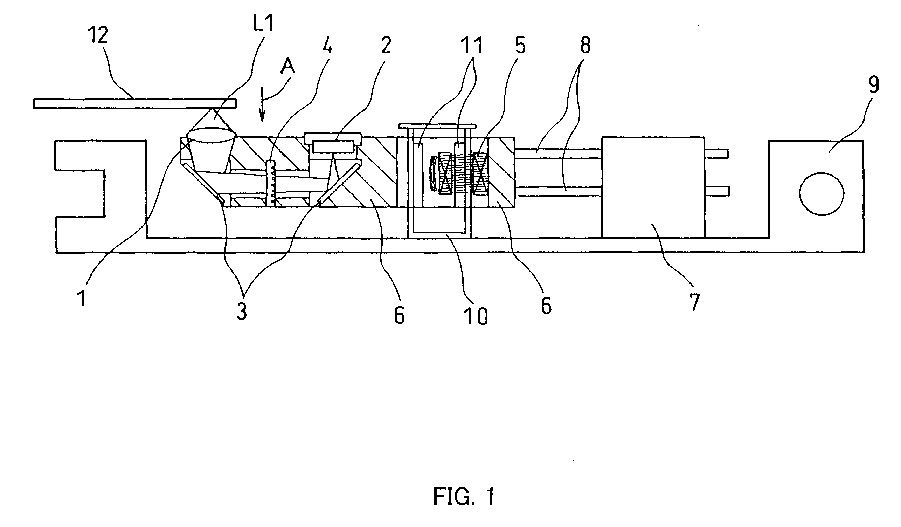

Figure 1 shows a configuration of an optical pick-up in a first embodiment according to the present invention. To make the configuration more understandable, the optical pick-up is shown as a partially cross-sectional view. An optical pick-up shown in Figure 1 includes an objective lens 1, an integrated element 2 of a semiconductor laser array and a photodetector, a mirror 3, a hologram optical element 4, a coil 5, and the like, which are mounted on a movable portion 6. The movable portion 6 is fixed to the fixed portion 7 by using twenty supporting components 8. The movable portion 6 is rockable in a focus direction and tracking direction of the optical recording medium 12 by the bending of the supporting components 8.

Eighteen out of the twenty supporting components 8 are not shown because they are hidden behind the two supporting components shown in this figure. Furthermore, although not shown, the end portions of the supporting components 8 are connected to the control circuit etc. by a flexible substrate and the like. Furthermore, the light flux L1 represents both laser beams emitted from the semiconductor laser array of the integrated element 2 and returned light beams from the optical recording medium.

Furthermore, the semiconductor laser array of the integrated element 2 has a plurality of lasing wavelengths, and an optical axis of the semiconductor laser element having the shortest wavelength is aligned with the center of the optical axis of the objective lens 1.

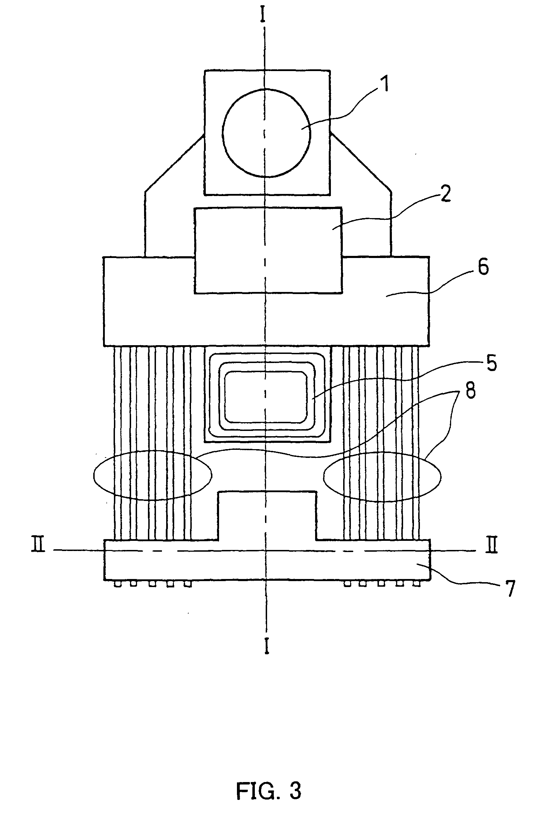

Figure 3 shows a main part of the optical pick-up shown in Figure 1 seen from the direction shown by an arrow A. When the resin molding of the movable portion 6 and the fixed portion 7 are carried out, the supporting components 8 are embedded in the movable portion 6 and the fixed portion 7. Furthermore, the supporting components 8 are disposed symmetrically in a left-to-right direction with respect to a line I-I passing the center of the objective lens 1.

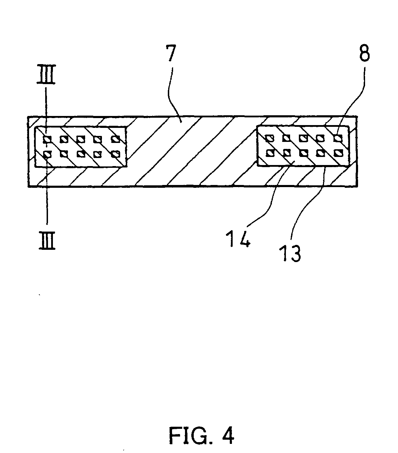

Figure 4 is a cross sectional view taken along line II-II in Figure 3. The fixed portion 7 is provided with a damping hole 13 so as to surround the base end portion of the supporting components 8. The inside of the damping hole 13 is filled with a gel-like damping member 14 having visco-elasticity, which suppresses the generation of resonance. As the gel-like damping member 14, a UV setting silicon gel material was used.

Furthermore, the supporting material 8 is made of a metal material. When the metal material, for example, phosphor bronze, beryllium copper, titanium copper or the like, which is harder, more elastic and less prone to oxidation than copper, is used, a stable control can be carried out.

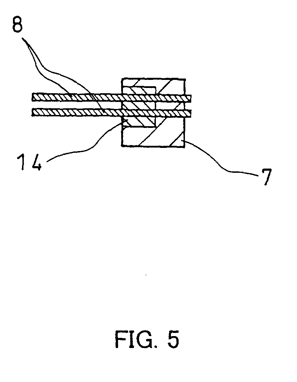

The supporting components 8 are independent in electric potential from each other and also function as wiring for supplying electricity and interchanging signals to a semiconductor laser array or a photodetector. Figure 5 is a cross-sectional view taken along line III-III in Figure 4. The supporting components 8 are embedded in and fixed to the fixed portion 7.

Furthermore, as shown in Figure 1, a coil 5 is attached to the movable portion 6. A yoke 10 attached to an optical base board 9 is provided with a magnet 11. The coil 5 and the magnet 11 can form a magnetic circuit. The magnetic power generated by the magnetic circuit enables the supporting components 8 to bend, which makes it possible to control the rocking motion of the movable portion 6 integrated with the supporting components 8 both in the focus direction and in the tracking direction.

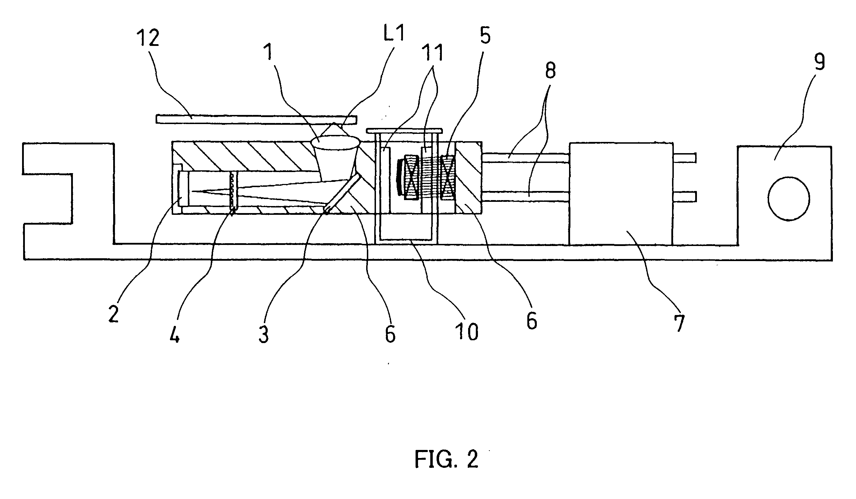

Figure 2 shows a configuration of an optical pick-up in another embodiment according to the present invention, which is different from the embodiment shown in Figure 1 in the arrangement of each portion inside the movable portion 6. However, the configuration in which an objective lens 1, an integrated element 2 of a semiconductor laser array and a photodetector, a mirror 3, a hologram optical element 4 and a coil 5 are mounted on a movable portion 6 is the same as the configuration shown in Figure 1, and the basic operation also is the same as in Figure 1.

In this embodiment, an integrated element 2 of a semiconductor laser array and a photodetector, the optical element such as a mirror 3, etc. are fixed with respect to the objective lens 1. Namely, since the optical system carrying out emitting of laser beams and photo-receiving is formed into one piece with the movable portion 6, it is possible to prevent the optical displacement in the optical system when the position of the objective lens 1 is changed. Therefore, it is possible to prevent the deterioration of the optical property due to the generation of aberration etc. in following up the vertical vibration of the optical recording medium 12 or an information recording line.

Furthermore, in this embodiment, as mentioned above, the optical axis of the semiconductor laser element having the shortest wavelength of the semiconductor laser elements constituting the semiconductor element array of the integrated element 2 is aligned with the center of the optical axis of the objective lens 1. Thus, the laser beams from the short wavelength semiconductor laser element that is more susceptible to the lens aberration, etc. pass through the vicinity of the optical axis of the objective lens 1 that is less susceptible to the lens aberration. Therefore, it is possible to reduce an influence by the lens aberration, etc. with respect to the lens aberration, thus preventing the deterioration of the optical property of the optical pick-up.

The effect can be enhanced further by combining with the configuration in which the optical system is integrated into the movable portion 6. Namely, even if the objective lens 1 follows up the optical recording medium 12, since the optical system moves together with the optical system, the relationship in which the optical axis of the semiconductor laser element having the shortest semiconductor laser element is aligned with the center of the optical axis of the objective lens 1 is maintained even if the position of the objective lens 1 is changed. Therefore, when the position of the objective lens 1 is changed, it is possible to obtain the effect of preventing the deterioration of the optical property without carrying out the particular adjustment accompanying the position change of the objective lens 1.

Moreover, in this embodiment, an example of the semiconductor element array is explained, but the invention is not necessarily limited to this example, and the same effect can be obtained with a plurality of separately produced semiconductor laser elements instead of a semiconductor laser array.

The end portion of the supporting component 8, which is not embedded in a box surrounding thereof, may be adhered by soldering, UV resin adhesion, or molten glass adhesion or the like. In these cases, the same effect can be obtained.

It is preferable that the movable portion 6, a fixed portion 7 and the supporting portion 8 are resin molded by the use of a mold simultaneously. Thus, it is possible to obtain a structure in which the length of the support components and the stress are uniform.

Second Embodiment

The second embodiment relates to a semiconductor laser element, which can be used for the optical pick-up according to the first embodiment.

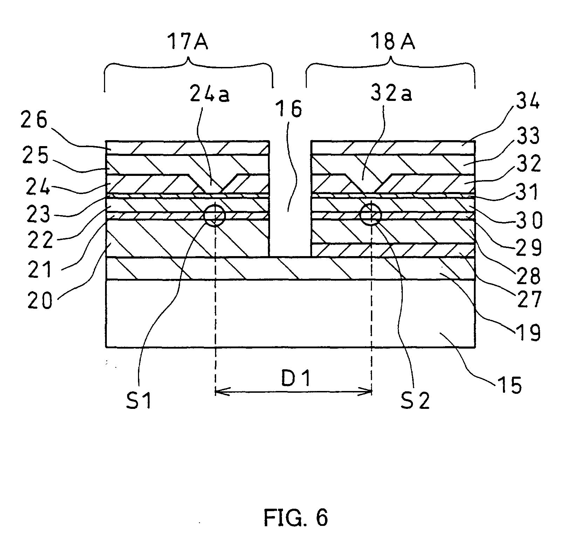

Figure 6 is a cross-sectional view showing a configuration of a semiconductor laser array in a second embodiment according to the present invention. As shown in Figure 6, on a substrate 15 including n-type GaAs, an infrared semiconductor laser element 17A and a red semiconductor laser element 18A, which are separated from each other by a separation groove 16, are formed monolithically.

The infrared semiconductor laser element 17A is formed by the below mentioned layers, which are sequentially formed on the substrate 15. On the substrate 15, a buffer layer 19 is formed. The buffer layer 19 is formed of n-type GaAs and improves the crystalline property of the semiconductor layers growing on the substrate 15.

On the buffer layer 19, a first n-type clad layer 20 is formed. The first n-type clad layer 20 is formed of n-type $Al_xGa_{1-x}As$ ($0<x\leqq1$) and confines a carrier (electron) and a recombination radiation beam of the carrier in the below mentioned first active layer.

On the first n-type clad layer 20, a first active layer 21 is formed. The first active layer 21 is formed of AlGaAs having a composition with the lasing wavelength of 750 nm to 850 nm. On the first active layer 21, a first p-type clad layer 22 is formed. The first p-type clad layer 22 is formed of p-type $Al_{x1}Ga_{1-x1}As$ ($0<x1\leqq1$) and confines a carrier (hole) and a recombination radiation beam of the carrier in the first active layer 21.

On the p-type clad layer 22, a second p-type clad layer 23 is formed. The second clad layer 23 is formed of p-type $Al_{x2}Ga_{1-x2}As$ ($0\leqq x2\leqq1$) and works as an etching stopper when an opening portion of the below-mentioned first current block layer is formed.

On the second p-type clad layer 23, a first current block layer 24 is formed. The first current block layer 24 is formed of n-type $Al_{y1}Ga_{1-y1}As$ ($0<y1\leqq1$), has an energy gap (band gap) that is larger than the energy of the emitted light from the first active layer 21, and has an opening portion 24a (wherein the opening portion 24a extends in the vertical direction in the figure) for forming a stripe-shaped current channel in the first active layer 21.

On the first current block layer 24, a third p-type clad layer 25 is formed. The third p-type clad layer 25 is formed of p-type $Al_{x3}Ga_{1-x3}As$ ($0<x3 \leqq 1$) and is formed so as to fill in the opening portion 24a.

On the third p-type clad layer 25, a first p-type contact layer 26 is formed. The first p-type contact layer 26 is formed of p-type GaAs and is brought into ohmic contact with a first p-side electrode (not shown in the figure) formed on p-type GaAs.

The red semiconductor laser element 18A is formed by the below mentioned layers that are sequentially formed on the buffer layer 19 with spaced to the infrared semiconductor laser element 17A via a separating groove 16. On the buffer layer 19, a height adjusting buffer layer 27 is formed. The height adjusting buffer layer 27 is formed of a first conductive type n-type GaAs, functions as improving the crystalline property of semiconductor layers growing on the substrate 15, and has a layer thickness that is adjusted so that the height of the active layer 21 from the surface of the substrate 15 and the height of the below mentioned second active layer from the surface of the substrate 15 are the same.

On the height adjusting buffer layer 27, a second n-type clad layer 28 is formed. The second n-type clad layer 28 is formed of n-type $(Al_2Ga_{1-z})_{0.5}In_{0.5}P$ ($0<z\leqq1$), and confines a carrier (electron) and a recombination radiation beam of the carrier in the below mentioned second active layer.

On the second n-type clad layer 28, a second active layer 29 is formed. The second active layer is formed of AlGaInP having a composition with the lasing wavelength of 635 nm to 680 nm, and has a multiple quantum well structure.

On the second active layer 29, a fourth p-type clad layer 30 is formed. The fourth p-type clad layer 30 is formed of p-type $(Al_{x4}Ga_{1-x4})_{0.5}In_{0.5}P$ ($0<x4\leqq1$), and confines a carrier (hole) and a recombination radiation beam of the second active layer 29.

On the fourth clad layer 30, a fifth p-type clad layer 31 is formed. The fifth p-type clad layer 31 is formed of p-type $(Al_{x5}Ga_{1-x5})_{0.5}In_{0.5}P$ ($0\leqq x5\leqq1$) and works as an etching stopper when an opening portion of the below mentioned second current block layer is formed.

On the fifth p-type clad layer 31, a second current block layer 32 is formed. The second current block layer 32 is formed of n-type $(Al_{y2}Ga_{1-y2})_{0.5}In_{0.5}P$ ($0<y2\leqq1$), has an energy gap larger than the energy of the light beams emitted from the second active layer 29, and has an opening portion 32a extending in parallel to the opening portion 24a of the first electric block layer 24.

On the second current block layer 32, a sixth p-type clad layer 33 is formed. The sixth p-type clad layer 33 is formed of p-type $(Al_{x6}Ga_{1-x6})_{0.5}In_{0.5}P$ ($0<x6\leqq1$) and is formed so as to fill in the opening portion 32a.

On the sixth p-type clad layer 33, a second p-type contact layer 34 is formed. The second p-type contact layer 34 is formed of p-type GaAs and is brought into ohmic contact with a second p-side electrode (not shown in the figure) formed on the upper surface.

The distance D1 between the emitting spot S1 of the infrared semiconductor laser element 17A and the emitting spot S2 of the red semiconductor element 18A can be controlled with the accuracy of the photolithography of the semiconductor diffusion process. Therefore, high accuracy and reduction of distance can be achieved as compared with the apparatus in which laser chips are fabricated in a hybrid form.

Herein, the separation groove 16 is in a state in which the upper surface of the buffer layer 19 is exposed. However, the substrate 15 may be exposed. Furthermore, the height adjusting buffer layer 27 of the red semiconductor laser element 18A also may function as the buffer layer 19.

The infrared semiconductor laser element 17A according to the embodiment is an index-guided laser element in which the structural parameter such as a layer thickness of each semiconductor layer and composition of Al, and the like are set so that the difference $\Delta n$ between an effective refractive index n1 in the direction perpendicular to the substrate surface in the region with the opening portion 24a of the first current block layer 24 and an effective refractive index n2 in the direction perpendicular to the substrate surface in the region excluding the opening portion 24a is about $2 \times 10^{-3}$ to about $1 \times 10^{-2}$.

Similarly, the red semiconductor laser element 18A according to this embodiment is an index-guided laser element in which the structural parameter such as a layer thickness of each semiconductor layer and composition of Al, and the like is set so that the difference $\Delta n$ between an effective refractive index n1 in the direction perpendicular to the substrate surface in the region with the opening portion 32a of the second current block layer 32 and an effective refractive index n2 in the direction perpendicular to the substrate surface in the region excluding the opening portion 32a is about $2 \times 10^{-3}$ to about $1 \times 10^{-2}$.

The following is an explanation of an example of the structural parameter providing the infrared semiconductor laser 17A and the red semiconductor laser element 18A with a self-sustained pulsation property necessary for reducing the noise.

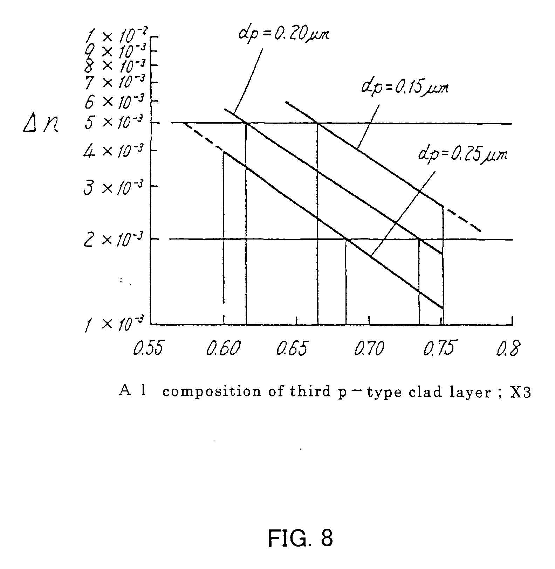

Figure 8 is a graph showing a relationship between a layer thickness of the first p-type clad layer 22 and an Al composition x3 of the third p-type clad layer 25 with respect to the effective refractive index difference $\Delta n$ in the infrared semiconductor laser element 17A. Herein, the other structural parameters are set as follows. The layer thickness of the first n-type clad layer 20 is set to be about 1.5 $\mu$ m and the Al composition x is set to be 0.5. The layer thickness of the first active layer 21 is set to be about 0.06 $\mu$m. The Al composition x1 of the first p-type clad layer 22 is set to be 0.5. The layer thickness of the second p-type clad layer 23 is set to be about 0.01 $\mu$m. The Al composition x2 is set to be 0.2. The layer thickness of the first current block layer 24 is set to be about 1 $\mu$m. The Al composition y1 is set to be 0.65. The layer thickness of the third p-type clad layer 25 is set to be about 2.2 $\mu$m.

As is apparent from Figure 8, as the layer thickness dp of the first p-type clad layer 22 is smaller, and as the Al composition X3 of the p-clad layer 25 is smaller, the effective refractive index difference $\Delta n$ becomes larger. In order to obtain the stable self-sustianed pulsation property, the effective refractive index is required to satisfy: $\Delta n = 2 \times 10^{-3}$ to $5 \times 10^{-3}$. For example, when the layer thickness dp of the first p-type clad layer 22 is set to be 0.20 $\mu$m, the Al composition X3 of the third p-type clad layer 25 may be about 0.61 to 0.74.

The combination of the structural parameters in order to realize the effective refractive index difference $\Delta n = 2 \times 10^{-3}$ to $5 \times 10^{-3}$ shown in Figure 8 is given as an example, and when other structured parameters (Al composition and the layer thickness of the semiconductor layers) are changed, the appropriate combination is naturally changed.

Similarly, also in the red semiconductor laser element 18A, by appropriately selecting the structural parameters for realizing the effective indexes difference $\Delta n = 2 \times 10^{-3}$ to $5 \times 10^{-3}$, the self-sustianed pulsation property can be realized. Al composition z of the second n-type clad layer 28 is set to be 0.7, and the lasing wavelength is set to be 635 nm to 680 nm. Al composition x4 of the fourth p-type clad layer 30 is set to be 0.7, and the layer thickness is set to be about 0.1 $\mu$m to 0.3 $\mu$m. Al composition x5 of the fifth p-type clad layer 31 is set to be 0.0 to 0.1, and the layer thickness is set to be about 0.009 $\mu$m. Al composition y2 of the second current block layer 32 is 0.5, and the Al composition x6 of the sixth p-type clad layer 33 is set to be 0.6 to 0.75. Thus, the effective refractive index difference $\Delta n = 2 \times 10^{-3}$ to $5 \times 10^{-3}$ can be realized.

Furthermore, as shown in Figure 6, the red semiconductor laser element 18A according to this embodiment includes a height adjusting buffer layer 27 between the buffer layer 19 and the second n-type clad layer 28. The height adjusting buffer layer 27 improves the crystalline property of the semiconductor of the red semiconductor laser element 18A but also adjusts the height of the second active layer 29 from the surface of the substrate 15 to be substantially the same as the height of the first active layer 21 from the surface of the substrate 15 in the infrared semiconductor layer 17A.

For example, in the case of the relatively high output operation of the infrared semiconductor laser element 17A and the red semiconductor laser element 18A, the layer thickness of the first n-type clad layer 20 is required to be 2.0 $\mu$m or more. On the other hand, the layer thickness of the second n-type clad layer 28 may be 1.5 $\mu$m or more. Therefore, in this case, the layer thickness of the height adjusting buffer layer 27 may be about 0.5 $\mu$m.

Furthermore, in the case of the relatively low output operation, the layer thickness of the first n-type clad layer 20 is required to be 1.5 $\mu$m or more and the layer thickness of the second n-type clad layer 28 is required to be 1.1 $\mu$m or more. Therefore, in this case, the layer thickness of the height adjusting buffer layer 27 may be about 0.4 $\mu$m.

As mentioned above, in any of the high output operation semiconductor laser array and the low output operation semiconductor laser array, by adjusting the layer thickness of the height adjusting buffer layer 27, the height of the first active layer 21 from the substrate surface 15 and the height of the second active layer 29 from the substrate surface 15 can be made to be the same. Thereby, the variance in height of the emission spots can be prevented.

As mentioned above, according to this embodiment, the self-sustianed pulsation semiconductor element array can be realized. Furthermore, the high output operation can be carried out. Furthermore, the red semiconductor laser element 18A, which is the side of the shorter wavelength among the dual wavelength laser element arrays, is provided with the height adjusting buffer layer 27 for suppressing the variance in height of the first active layer 21 and the second active layer 29 from the substrate surface. Namely, since the height of the light emitting spot of each semiconductor element is adjusted to be uniform in advance, when the semiconductor laser array according to the present invention is incorporated into the information recording and reproducing apparatus, it is easy to carry out the positioning with respect to the optical components.

The distance D1 between the emitting spot S1 of the infrared semiconductor laser element 17A and the emitting spot S2 of the red semiconductor element 18A can be controlled with the accuracy of the photolithography of the semiconductor diffusion process. Therefore, high accuracy and reduction of distance can be achieved as compared with the apparatus in which laser chips are fabricated in a hybrid form.

Furthermore, a height of the emitting spot S1 of the infrared semiconductor laser element 17A, a height of the emitting spot S2 of the red semiconductor laser element 18A, and a difference D2 between heights satisfy the following equation (1):

$$D3 = \sqrt{D1^2 + D2^2} \qquad (1)$$

However, since the height adjusting buffer layer 27 is provided, $D2 \fallingdotseq 0$ and $D3 \fallingdotseq D1$ are satisfied. Therefore, D3 can be shortened with an extremely high accuracy, thus enabling the lens aberration to be suppressed. Therefore, as in the first embodiment, when an optical axis of the semiconductor laser element having the shortest wavelength (the red semiconductor element 18A in Figure 8) of the semiconductor laser elements constituting semiconductor element array is aligned with the center of the optical axis of the objective lens 1, it minimizes the displacement from the optical axis of the semiconductor laser element having the shortest wavelength. Thereby, it is possible to reduce the influence of the lens aberration, etc. with respect to the semiconductor laser element having a short wavelength, and thus the effect of preventing the deterioration of the optical property of the optical pick-up can be enhanced.

Furthermore, in a case where the high output laser beam necessary for the writable optical disk is required, by setting the effective refractive index difference $\Delta n$ to be $4 \times 10^{-3}$ to $1 \times 10^{-2}$, the transverse mode is further stabilized and thus the high output operation semiconductor laser array can be realized.

Third Embodiment

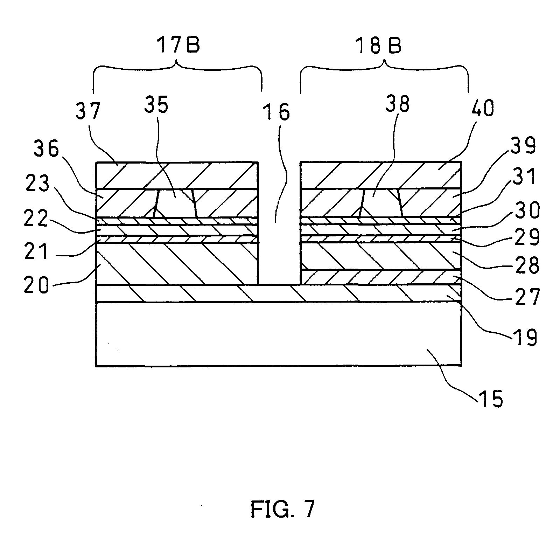

Figure 7 is a cross-sectional view showing a configuration of the semiconductor laser array in the third embodiment according to the present invention. As shown in Figure 7, on a substrate 15 including n-type GaAs, an infrared semiconductor laser element 17B and a red semiconductor laser element 18B, which are separated from each other by a separation groove 16, are formed monolithically.

The infrared semiconductor laser element 17B is formed by the below mentioned layers that are sequentially formed on the substrate 15. On the substrate 15, a buffer layer 19 including n-type GaAs is formed. On the buffer layer 19, a first n-type clad layer 20 including n-type $Al_xGa_{1-x}As$ ($0<x\leqq 1$) is formed.

On the first n-type clad layer 20, a first active layer 21 including AlGaAs having a composition with the lasing wavelength of 750 nm to 850 nm is formed.

On the first active layer 21, a first p-type clad layer 22 including p-type $Al_{x1}Ga_{1-x1}As$ ($0<x1\leqq 1$) is formed, and a second p-type clad layer 23 including p-type $Al_{x2}Ga_{1-x2}As$ ($0\leqq x2\leqq 1$) is formed thereon.

On the second p-type clad layer 23, a third p-type clad layer 35 including p-type $Al_{x3}Ga_{1-x3}As$ ($0<x3\leqq 1$) is formed. The third p-type clad layer 35 has a ridge structure extending in the vertical direction in the figure. On the second p-type clad layer 23, a first current block layer 36 is formed. The first current block layer 36 is formed of n-type $Al_{y1}Ga_{1-y1}As$ ($0<y1\leqq 1$), is formed on the side area of the third p-type clad layer 35 on the second p-type clad layer 23 and has an energy gap larger than the energy of the light beams emitted from the first active layer 21.

On the third p-type clad layer 35 and the first current block layer 36, a p-type contact layer 37 is formed. The p-type clad layer 37 is formed of p-type GsAs and is brought into ohmic contact with a second p-side electrode (not shown in the figure) formed on p-type GaAs.

The red semiconductor laser element 18B is formed by the below mentioned layers that are sequentially formed on the buffer layer 19 with spaced to the infrared semiconductor laser element 17A via a separating groove 16. On the buffer layer 19, a height adjusting buffer layer 27 including a first conductive type n-type GaAs is formed. The height adjusting buffer layer 27 is formed of a first conductive type n-type GaAs functions as improving the crystalline property of semiconductor layers growing on the substrate 15 and has a layer thickness that is adjusted so that the height of the active layer 21 from the surface of the substrate 15 and the height from the below mentioned second active layer from the surface of the substrate 15 are the same.

On the height adjusting buffer layer 27, a second n-type clad layer 28 including n-type $(Al_zGa_{1-z})_{0.5}In_{0.5}P$ ($0<z\leqq 1$) is formed. On the n-type clad layer 28, a second active layer 29 is formed. The n-type clad layer 28 is formed of AlGaInP having a composition having the lasing wavelength of 635 nm to 680 nm and has a multiple quantum well structure.

On the second active layer 29, a fourth p-type clad layer 30 including p-type $(Al_{x4}Ga_{1-x4})_{0.5}In_{0.5}P$ ($0<x4\leqq 1$) is formed, and a fifth clad layer 31 including p-type $Al_{x5}Ga_{1-x5}In_{0.5}P$ ($0\leqq x5\leqq 1$) is formed thereon.

On the fifth p-type clad layer 31, a sixth p-type clad layer 38 including p-type $(Al_{x6}Ga_{1-x6})_{0.5}In_{0.5}P$ ($0<x6\leqq 1$) is formed. The sixth p-type clad layer 38 has a ridge structure extending in the vertical direction in substantially parallel to the third p-type clad layer 35. On the fifth p-type clad layer 31, a second current block layer 39 including n-type $(Al_{y2}Ga_{1-y2})_{0.5}In_{0.5}P$ ($0<y2\leqq 1$) is formed. The p-type clad layer 31 has an energy gap larger than the energy of the light beams emitted from the second active layer 21.

On the p-type clad layer 38 and the second current block layer 39, a p-type contact layer 40 is formed including p-type GaAs is formed. The p-type contact layer 40 is brought into ohmic contact with a second p-side electrode (not shown in the figure) formed on p-type GaAs that is formed on the entire surface including the sixth p-type clad layer 38.

Also in this embodiment, as shown in the second embodiment, by appropriately selecting the structural parameters for realizing the effective refractive index difference $\Delta n= 2 \times 10^{-3}$ to $5 \times 10^{-3}$, the self-sustained pulsation property can be realized. Furthermore, the effect of the height adjusting buffer layer 27 is the same as in the second embodiment.

Fourth Embodiment

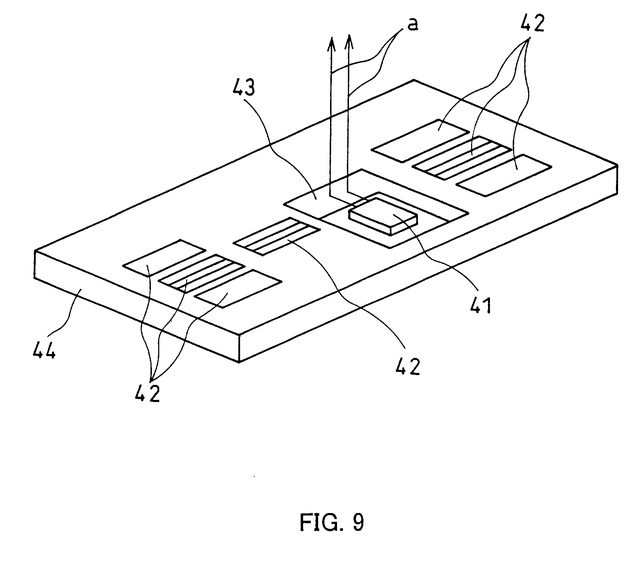

Figure 9 is a perspective view showing an integrated element used for an optical pick-up in a fourth embodiment according to the present invention. On the optical pick-up shown in Figure 9, an integrated element of a semiconductor laser array and a photodetector are mounted on a movable portion (the movable portion 6 in Figures 1 and 2). More specifically, on the semiconductor substrate 44, a semiconductor laser array is provided and a mirror 43 is formed in a vicinity of the semiconductor laser array 41. With the mirror 43, a laser beam is reflected from the semiconductor laser array 41 so that the beam axis becomes perpendicular to the surface of the semiconductor substrate surface. In this embodiment, the mirror 43 is formed by etching Si substrate. Furthermore, around the mirror 43, a photodetector 42 that is divided into a plurality portions is provided.

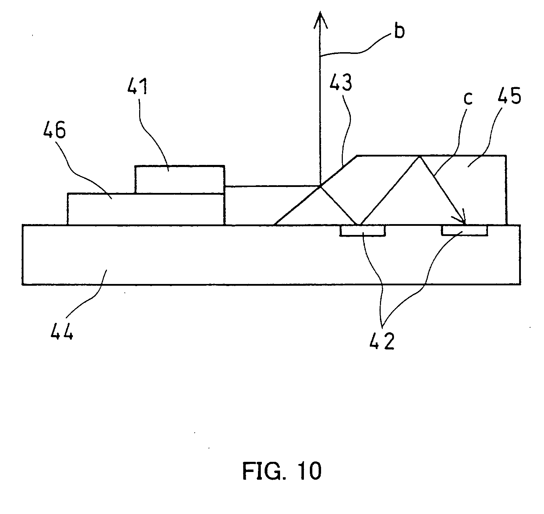

Figure 10 is a side view of another example of the integrated element. On the semiconductor substrate 44, a second semiconductor substrate 46, a semiconductor laser array 41, and a prism 45 are formed on a semiconductor substrate 44. The prism 45 has a mirror 43. With the mirror 43, as shown by arrow B in Figure 10, the laser beams are reflected from the semiconductor laser array 41 so that the beam axis becomes perpendicular to the surface of the semiconductor substrate surface. Under the mirror 43, a photodetector 42 that is divided into several portions is provided and receives returned light beams shown by an arrow c.

According to this embodiment, since the semiconductor laser array, a plurality of photodetector and the mirror are integrated on the semiconductor substrate, that is, since these components are integrated via the same substrate instead of being disposed separately, a miniaturization of an optical pick-up can be realized and the effect of the aberration can be suppressed.

In this embodiment, as in each of the above-mentioned embodiments, when an optical axis of the semiconductor laser element having the shortest wavelength of the semiconductor laser elements constituting semiconductor element array is aligned with the center of the optical axis of the objective lens, the displacement from the optical axis of the semiconductor laser element having the shortest wavelength can be minimized. Thereby, it is possible to reduce the influence of the lens aberration, etc with respect to the short wavelength semiconductor laser element, and thus the effect of preventing the deterioration of the optical property of the optical pick-up can be enhanced.

Fifth Embodiment

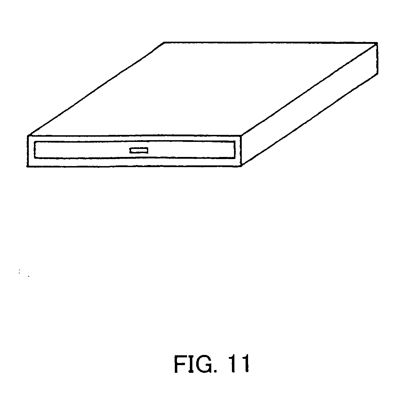

Figure 11 is a perspective view showing an information recording and reproducing apparatus in a fifth embodiment according to the present invention. An information recording and reproducing apparatus of the fifth embodiment according to the present invention uses an optical pick-up described in the first to fourth embodiments.

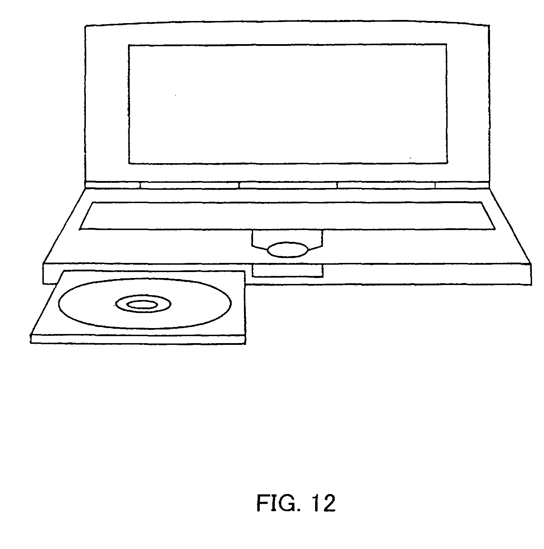

With this configuration, it is possible to realize a small and thin information recording and reproducing apparatus capable of reproducing and recording the data of a plurality of optical media having a different optimal wavelength, and having a stable signal property. Furthermore, Figure 12 is a perspective view showing a notebook-sized personal computer on which an information recording and reproducing apparatus is mounted in a fifth embodiment according to the present invention. Since the notebook sized personal computer shown in Figure 12 uses an information recording and reproducing apparatus according to this embodiment, it is possible to record and reproduce a plurality of optical media having a different optimal wavelength, which contributes to making a small and thin notebook-sized personal computer.

As mentioned above, according to the present invention, since the optical system carrying out the emission of laser beams and the photo-receiving is formed in one piece on the movable portion, it can prevent the optical displacement in the optical system when the position change of the objective lens occurs. Furthermore, since an optical axis of the semiconductor laser element having the shortest wavelength is aligned with the center of the optical axis of the objective lens, it is possible to reduce the effect of the lens aberration and the like with respect to the short wavelength semiconductor laser element that is susceptibly, thus preventing the deterioration of the optical pick-up. Furthermore, even if the objective lens follows up the optical recording medium, since the optical system moves as a whole, the relationship in which the optical axis of the semiconductor laser element having the shortest semiconductor laser element is aligned with the center of the optical axis of the objective lens is maintained even if the position of the objective lens is changed. Therefore, when the position of the objective lens 1 is changed, it is possible to obtain the effect of preventing the deterioration of the optical property without carrying out the specific adjustment accompanying the position change of the objective lens.

**Claims**

1.  An optical pick-up comprising

a movable portion on which at least a plurality of semiconductor laser elements irradiating an optical recording medium with laser beams and an objective lens converging laser beams emitted from the semiconductor laser elements are mounted,
a fixed portion supporting the movable portion, and
a supporting component connecting the movable portion to the fixed portion so that the movable portion is rockable in a focus direction and a tracking direction of the optical recording medium;

wherein at least two of the plurality of semiconductor laser elements have a different lasing wavelength from each other and an optical axis of the semiconductor laser element having the shortest wavelength is aligned with the center of the optical axis of the objective lens.

2. The optical pick-up according to claim 1, wherein the plurality of semiconductor laser elements are elements included in a semiconductor laser array having a plurality of lasing wavelengths.

3. The optical pick-up according to claim 2, wherein the semiconductor laser array comprises a first laser element having a first active layer comprising a first semiconductor formed on a substrate; and a second laser element formed on the substrate, spaced with respect to the first laser element and having a second active layer comprising a second semiconductor having an energy gap larger than the energy gap of the first active layer, and wherein a height from the substrate surface to the second active layer is substantially the same as a height from the substrate surface to the first active layer.

4. The optical pick-up according to claim 3, wherein the second laser element has a height adjusting buffer layer including a third semiconductor that is first conductive type so that the height from the substrate surface to the second active layer is substantially the same as the height from the substrate surface to the first active layer.

5. The optical pick-up according to claim 1, wherein a photodetector for receiving returned light beams from the optical information recording medium is mounted on the movable portion.

6. The optical pick-up according to claim 5, wherein the plurality of semiconductor laser elements and the photodetectors are integrated via a substrate, and the substrate is provided with a mirror reflecting laser beams emitted from the semiconductor laser element.

7. The optical pick-up according to claim 6, wherein the plurality of semiconductor elements are elements included in a semiconductor laser array having a plurality of lasing wavelengths.

8. The optical pick-up according to claim 1, wherein the supporting components comprise a plurality of metal members independent in electric potential respectively, and at least one of the plurality of metal members works as an electric feeder line with respect to the semiconductor laser element.

9. The optical pick-up according to claim 8, wherein a photodetector receiving returned light beams from the optical information medium is further mounted on the movable portion, and at least one of the plurality of metal members works as an electric feeder line with respect to the photodetector.

10. An information recording and reproducing apparatus on which an optical pick-up according to any one of claims 1 to 9 is mounted.

FIG. 1

FIG. 2

FIG. 3

FIG. 4

FIG. 5

FIG. 6

FIG. 7

$\Delta n$

$dp = 0.20 \mu m$

$dp = 0.15 \mu m$

$dp = 0.25 \mu m$

A l   composition of third p − type clad layer ; X3

FIG. 8

FIG. 9

FIG. 10

FIG. 11

FIG. 12

FIG. 13